# FASCICULE DE BREVET EUROPEEN

(11) **EP 3 405 028 B1**
(45) Date de publication et mention de la délivrance du brevet: **07.05.2025**
(21) Numéro de dépôt: 17706276.7
(22) Date de dépôt: 19.01.2017
(51) Int. Cl.: A01N 1/02, A61D 19/02

(54) **DISPOSITIF POUR LA CONSERVATION D'UNE DOSE PRÉDÉTERMINÉE DE SUBSTANCE À BASE LIQUIDE, ET GAMME DE TELS DISPOSITIFS**
VORRICHTUNG ZUR KONSERVIERUNG EINER VORGEGEBENEN DOSIS EINER SUBSTANZ AUF FLÜSSIGKEITSBASIS UND PALETTE AUS SOLCHEN VORRICHTUNGEN
DEVICE FOR PRESERVING A PREDETERMINED DOSE OF LIQUID-BASED SUBSTANCE, AND RANGE OF SUCH DEVICES

(30) Priorité: 19.01.2016 FR 1650421
(43) Date de publication de la demande: 28.11.2018
(73) Titulaire: IMV Technologies, 61300 Saint Ouen Sur Iton (FR)
(72) Inventeur: SCHMITT, Eric, 53700 Villaines-La-Juhel (FR); GORGES, Jean-Charles, 72610 Chenay (FR); COUTURE, Olivier, 61300 Saint Ouen Sur Iton (FR)
(74) Mandataire: Santarelli
(86) Numéro de dépôt international: PCT/FR2017/050104
(87) Numéro de publication internationale: WO 2017/125679

(56) Documents cités:
- EP-A1- 2 156 735
- FR-A1- 2 846 128
- FR-A1- 2 912 727

## Description

L'invention a trait d'une manière générale à la conservation d'une dose prédéterminée de substance à base liquide, notamment d'une substance biologique telle que de la semence animale pure ou diluée ou un milieu de conservation contenant des embryons ou des échantillons tissulaires.

On sait qu'une telle conservation peut être effectuée avec un dispositif comportant un tube obturé après remplissage, puis placé dans une enceinte de conservation, par exemple une enceinte de conservation cryogénique.

La demande de brevet français 2 651 793, à laquelle correspond le brevet américain 5,190,880, décrit une paillette dont le tube est fait dans une matière thermofusible afin que ses extrémités puissent être obturées. Ce document décrit pour ce faire une machine d'obturation comportant des mâchoires présentant un organe saillant chauffant pour former, par écrasement et soudage de chaque extrémité du tube de la paillette, au droit de l'organe saillant, un pincement soudé de la paroi du tube formant un scellement hermétique.

La demande de brevet français 2 912 727, à laquelle correspond la demande de brevet américain US 2010/0107560, décrit un tube de conditionnement d'un volume prédéterminé de substance biologique ayant la forme d'un doigt de gant et fait dans une matière plastique ou un ensemble de matières plastiques permettant à son extrémité ouverte d'être obturée par écrasement et soudage, ce document décrivant également une machine d'obturation de l'extrémité ouverte de tels tubes, en position debout, cette machine comportant deux mâchoires mobiles présentant chacune un organe saillant chauffant pour former, par écrasement et soudage de l'extrémité supérieure du tube, au droit dudit organe saillant, un pincement soudé de la paroi du tube formant un scellement hermétique.

La demande de brevet européen EP 2 156 735 et la demande de brevet français FR 2 846 128 divulguent chacune un dispositif de conservation d'une dose prédéterminée.

L'invention vise à faciliter la tâche des opérateurs devant récupérer de tels dispositifs placés dans une enceinte de conservation.

L'invention propose à cet effet un dispositif pour la conservation d'une dose prédéterminée de substance à base liquide, comportant un tube en matière plastique soudable s'étendant entre une première extrémité et une seconde extrémité, lequel tube comporte un tronçon de réception prévu pour contenir ladite dose prédéterminée de substance à base liquide et un tronçon d'obturation prévu pour obturer le tube après que le tronçon de réception a été rempli avec ladite dose prédéterminée de substance à base liquide, lequel tronçon d'obturation s'étend entre la première extrémité du tube et le tronçon de réception, lequel tube admet :
- un état initial où le tronçon de réception et le tronçon d'obturation sont à section circulaire ; et
- un état de service où le tronçon de réception est à section circulaire tandis que le tronçon d'obturation comporte un pincement de la paroi du tube formant un scellement hermétique et comporte une zone de transition entre le pincement soudé et le tronçon de réception ;
caractérisé en ce que le tube comporte sur au moins une partie du tronçon d'obturation un liseré différenciant donnant à la surface externe du tube un aspect visuel différent de l'aspect visuel de la surface externe du tube hors du liseré différenciant, lequel liseré différenciant est configuré pour être visible du côté de la première extrémité alors que le tube est dans l'état de service.

Ainsi, le tube dans l'état de service vu du côté de la première extrémité peut être discriminé d'un tube semblable qui n'a pas ledit liseré différenciant.

L'invention offre ainsi aux opérateurs la possibilité de discriminer les deux tubes quasi-semblables alors qu'ils restent en place dans le récipient de l'enceinte de conservation, c'est-à-dire sans qu'il soit besoin d'extraire les deux tubes du récipient pour consulter des informations écrites sur la surface du tube.

On notera à ce sujet que les compartimentages habituellement utilisés pour grouper les dispositifs de conservation dans le récipient de l'enceinte sont moins hauts que les tubes des dispositifs, de sorte que le liseré, vu son positionnement, n'est pas caché par les compartimentages.

Les deux tubes peuvent par exemple avoir la même couleur pour indiquer une caractéristique principale de la substance contenue, par exemple qu'il s'agit de semence d'une certaine race bovine ; et l'absence ou la présence du liseré indique une caractéristique complémentaire, par exemple qu'il s'agit de semence mâle ou de semence femelle. De nombreux autres besoins de discrimination entre dispositifs de conservation peuvent être satisfaits par l'invention, par exemple le liseré peut être utilisé pour identifier une provenance particulière du dispositif dans le cadre d'une provenance générale.

On observera que l'invention permet de faciliter la tâche des opérateurs devant récupérer des dispositifs à tube dans l'enceinte de conservation, tout en étant simple, commode et économique à mettre en œuvre puisque les deux tubes quasi-semblables peuvent être fabriqués de la même façon et qu'il suffit d'ajouter le liseré sur les tubes des dispositifs devant être discriminés.

Selon des caractéristiques préférées :
- le liseré différenciant est présent au moins sur la zone de transition ;
- le liseré différenciant est présent au moins sur une partie du tronçon de réception voisine du tronçon d'obturation ;
- le liseré différenciant est annulaire lorsque le du tube est à l'état initial ;
- le liseré différenciant s'étend entre une première extrémité tournée vers la première extrémité du tube et une seconde extrémité tournée du côté opposé à la première extrémité du tube, avec la première extrémité du liséré différenciant qui est située dans le tronçon d'obturation à l'écart de la première extrémité du tube et la seconde extrémité du liséré différenciant qui est dans le tronçon de réception ;
- lorsque le tube est à l'état initial, la distance entre la première extrémité du liséré différenciant et la première extrémité du tube est comprise entre 0,1 mm et 4 mm ;
- lorsque le tube est à l'état initial, la distance entre la première extrémité et la seconde extrémité du liséré différenciant est comprise entre 2 mm et 20 mm ;
- lorsque le tube est à l'état initial, la distance entre la première extrémité du tube et la seconde extrémité du liséré différenciant est comprise entre 6 mm et 9 mm ;
- l'aspect visuel donné à la surface externe du tube par le liséré différenciant est une couleur uniforme, alors que l'aspect visuel de la surface externe du tube hors du liséré différenciant est la couleur de la matière du tube, qui est uniforme ;
- le liseré différenciant est formé par un revêtement externe du tube ;
- le pincement soudé est plat et s'étend de la première extrémité du tube à la zone de transition ;
- le pincement soudé est plat et s'étend de la zone de transition à un téton s'étendant entre le pincement soudé et la première extrémité du tube ;
- le dispositif forme une paillette comportant, en outre du tube, un bouchon disposé au voisinage de la seconde extrémité du tube à l'état initial ; et/ou
- le dispositif forme un tube de conservation ayant à l'état initial une forme de doigt de gant dont la première extrémité est ouverte à l'état initial et dont la seconde extrémité est fermée à l'état initial.

L'invention vise également, sous un deuxième aspect, une gamme de plusieurs dispositifs pour la conservation d'une dose prédéterminée de substance à base liquide, comportant un dispositif tel qu'exposé ci-dessus et un dispositif semblable mais sans le liseré différenciant.

L'exposé de l'invention sera maintenant poursuivi par la description détaillée d'exemples préférés de réalisation, donnée ci-après à titre illustratif et non limitatif, en référence aux dessins annexés. Sur ceux-ci :
- la figure 1 est une vue schématique en coupe longitudinale d'une paillette conventionnelle à l'état initial ;
- la figure 2 est une vue semblable à la figure 1, mais montrant la paillette à l'état rempli et obturé;
- la figure 3 montre de façon schématique les mâchoires d'une machine conventionnelle d'obturation ainsi que le tube de la paillette disposé à l'état initial entre les mâchoires ;
- la figure 4 est une vue partielle en élévation montrant le tronçon d'obturation et une partie du tronçon de réception du tube d'une paillette conforme à l'invention, à l'état initial ;
- la figure 5 est une vue semblable à la figure 4, mais avec le tube de la paillette à l'état de service ;
- les figures 6 et 7 sont des vues semblables à la figure 5, mais respectivement en plan et en bout ;
- les figures 8 à 10 sont des vues semblables aux figures 5 à 7, mais pour une conformation différente du tronçon d'obturation où le pincement soudé est à distance de l'extrémité du tube illustrée ;
- la figure 11 est une vue semblable à la figure 10, mais pour une conformation différente du pincement soudé et du téton existant entre le pincement soudé et l'extrémité du tube illustrée ;
- la figure 12 est une vue en élévation d'un tube de conditionnement en forme de doigt de gant conforme à l'invention, à l'état initial ; et
- la figure 13 est une vue semblable à la figure 12, mais avec le tube à l'état de service.

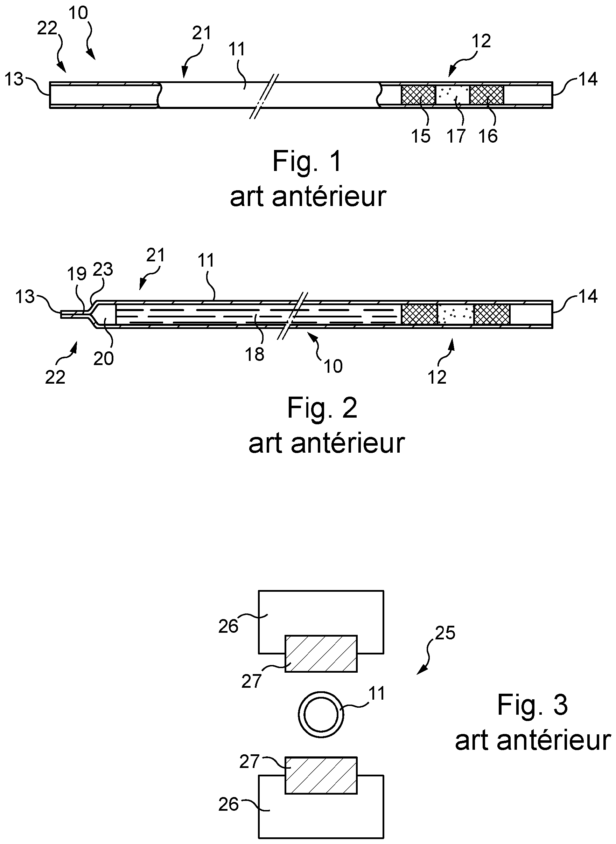

La figure 1 montre une paillette conventionnelle 10 formée par un tube 11 et par un bouchon 12.

Le tube 11 s'étend entre une extrémité 13 et une extrémité 14. Le tube 11 est en matière plastique soudable. Plus précisément, le tube 11 est en matière plastique extrudée compatible avec les températures cryogéniques (77 K) et thermofusible, ce qui permet de l'obturer par soudage entre des mâchoires à éléments chauffants ou à éléments ultra-sons qui le pincent.

Le diamètre interne du tube 11 est par exemple de 1,6 ou de 2,5 mm et sa longueur est de l'ordre de 133 mm.

Le bouchon 12, qui est engagé dans le tube 11, est du type tripartite décrit à l'origine dans le brevet français 995.878, correspondant au brevet britannique 669,265, c'est-à-dire formé par deux tampons 15 et 16 en substance fibreuse enserrant une poudre 17 susceptible de se transformer au contact d'un liquide en une pâte ou un gel imperméable adhérant à la paroi du tube.

La paillette 10 est classiquement prévue pour la conservation d'une dose prédéterminée d'une substance à base liquide, notamment une substance biologique, par exemple de la semence animale pure ou diluée ou encore un milieu de conservation contenant des embryons.

Sur la figure 1, la paillette 10 est montrée à l'état initial, c'est-à-dire ne contenant pas encore la dose de substance à base liquide qui doit y être conservée.

A l'état rempli, le bouchon 12 est dans la même position que sur la figure 1, c'est-à-dire disposé au voisinage de l'extrémité 14, et la dose de substance est disposée dans le tube 11 entre le bouchon 12 et l'extrémité 13.

Pour remplir la paillette, l'extrémité 14 voisine du bouchon 12 est mise en communication avec une source de vide tandis que l'extrémité 13 est mise en communication avec un récipient contenant la substance à introduire dans la paillette. L'air initialement contenu entre le bouchon 12 et l'extrémité 13 est aspiré au travers du bouchon 12 tandis que la substance progresse dans le tube 11 jusqu'à ce qu'elle rencontre le bouchon 12, qu'elle ne peut franchir, puisque le bouchon 12 devient étanche au contact du liquide que contient cette substance.

La figure 2 montre la paillette 10 à l'état rempli, c'est-à-dire contenant la dose 18 de substance à base liquide.

La figure 2 montre plus précisément la paillette 10 à l'état rempli et obturé, la zone voisine de l'extrémité 13 du tube 11 ayant été obturée par écrasement et soudage, cette zone ayant été enserrée entre des mâchoires portées à une température supérieure à la température de fusion de la matière du tube 11, de sorte qu'il se forme un pincement soudé 19. En variante, plutôt que des éléments chauffants, les mâchoires portent des éléments ultra-sons pour effectuer la soudure (la chaleur mettant localement en fusion la matière du tube 11 est due aux frottements engendrés par les éléments ultra-sons).

Il est également possible d'obturer de la même façon le tube 11 dans la zone voisine de l'extrémité 14 si l'on désire une obturation particulièrement hermétique du tube 11, sinon le bouchon 12 suffit pour que la dose 18 de substance à base liquide reste dans le tube 11.

Entre le pincement soudé 19 et la dose 18 de substance à base liquide, il subsiste une bulle d'air 20 qui est utile pour éviter la rupture de la paillette 10 lors de la congélation de la dose 18, laquelle s'accompagne d'une augmentation de volume.

Pour vider la paillette 10, par exemple après une période de conservation dans l'azote liquide et après décongélation, on coupe le tube 11 en deçà du pincement soudé 19, ce qui créé une nouvelle extrémité du tube 11 puis on fait coulisser le bouchon vers cette nouvelle extrémité, à la façon d'un piston, de sorte que la dose 18 de substance est expulsée du tube 11 par la nouvelle extrémité.

Dans la paillette 10, le tube 11 comporte un tronçon de réception 21 prévu pour contenir la dose 18 de substance à base liquide et un tronçon d'obturation 22 prévu pour obturer le tube 1 après que le tronçon de réception 21 a été rempli avec la dose 18.

Le tronçon d'obturation 22 s'étend entre le tronçon de réception 21 et l'extrémité 13.

Le tronçon de réception 21 s'étend entre le tronçon d'obturation 22 et le bouchon 12.

A l'état initial de la paillette 10 (figure 1), le tube 11 est dans un état initial où le tronçon de réception 21 et le tronçon d'obturation 22 sont à section circulaire.

A l'état rempli et obturé de la paillette 10 (figure 2), le tube 11 est dans un état de service où :
- le tronçon de réception 21 est à section circulaire ; et
- le tronçon d'obturation 22 comporte le pincement soudé 19 de la paroi du tube 11 et comporte une zone de transition 23 entre le pincement soudé 19 et le tronçon de réception 21.

Pour réaliser le pincement soudé 19, on utilise une machine d'obturation telle que la machine 25 montrée très schématiquement sur la figure 3.

La machine 25 comporte deux mâchoires 26 chacune mobile à coulissement pour passer de la position représentée où les mâchoires 26 sont à l'écart l'une de l'autre à une position où les mâchoires 26 sont rapprochées l'une de l'autre. L'entraînement des mâchoires 26 se fait manuellement ou de façon commandée, par exemple grâce à des vérins.

Chacune des mâchoires 26 comporte un élément de soudage (par chauffage ou par ultra-sons) 27 sur sa face qui regarde l'autre mâchoire 26.

Ainsi qu'illustré sur la figure 3, le tube 11 est prévu pour être positionné vis-à-vis de chaque mâchoire 26 avec le tronçon d'obturation 22 qui est en regard de l'élément de soudage 27.

Une fois le tube 11 correctement positionné, les mâchoires 26 sont rapprochées l'une de l'autre afin d'écraser le tronçon d'obturation 22 dans sa partie située entre les deux éléments soudage 27, les mâchoires 26 étant maintenues appliquées l'une contre l'autre.

Les mâchoires 26 sont ensuite écartées l'une de l'autre pour reprendre la position de repos illustrée sur la figure 3.

Ici, les éléments de soudage 27 sont plats et relativement larges, de sorte que le pincement soudé 19 est plat et s'étend de l'extrémité 13 à la zone de transition 23.

La paillette 10, à l'état rempli et obturé, est placée dans une enceinte de conservation, en général une enceinte de conservation cryogénique formée par un récipient contenant de l'azote liquide où la paillette 10 est plongée en étant maintenue verticalement avec le bouchon 12 en bas et le tronçon d'obturation 22 en haut.

La paillette 10 est en général maintenue verticalement en étant placée dans un gobelet conjointement avec d'autres paillettes. Les paillettes placées dans un gobelet sont en général groupées grâce à un compartimentage, par exemple formé par des fourreaux à section circulaire ou hexagonale appelés Visotubes.

L'opérateur devant récupérer des paillettes dans un récipient voit généralement les différentes paillettes contenues dans ce récipient depuis le haut.

Pour repérer les différentes paillettes, il existe différentes couleurs pour la matière des Visotubes et pour la matière des tubes 11 des paillettes 10.

En général, l'opérateur repère les paillettes concernées dans le récipient grâce à ces différentes couleurs. Par exemple, il sait que les paillettes à récupérer sont dans un Visotube vert et que leur tube est blanc.

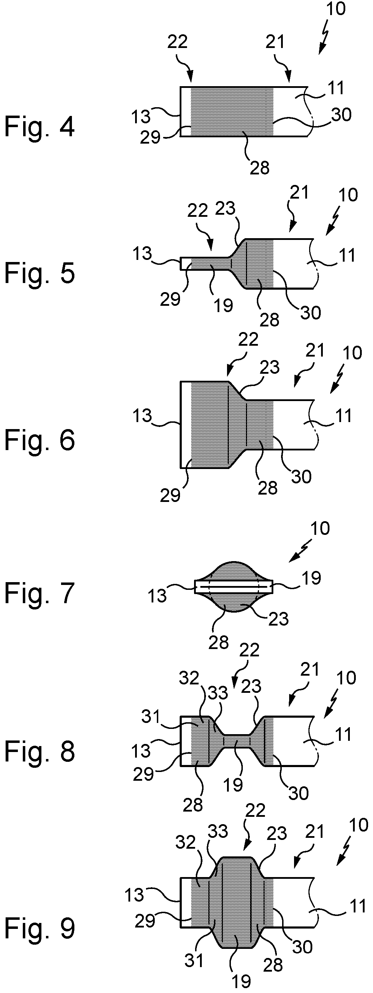

On va maintenant décrire une paillette conforme à l'invention à l'appui des figures 4 à 7.

Pour simplifier, on garde les mêmes références numériques que pour la paillette conventionnelle illustrée sur les figures 1 et 2.

La paillette 10 selon l'invention est identique à la paillette 10 conventionnelle illustrée sur les figures 1 et 2, si ce n'est que le tube 11 comporte sur une partie du tronçon d'obturation 22 un liseré différenciant 28 donnant à la surface externe du tube 11 un aspect visuel différent de l'aspect visuel de la surface externe du tube 11 hors du liseré 28.

Ici, le liseré 28 est situé sur tout le tronçon d'obturation 22 sauf que le liseré 28 est à l'écart de l'extrémité 13. Le liseré 28 est également situé sur une partie du tronçon de réception 21 voisine du tronçon d'obturation 22.

Le liseré 28 s'étend entre une extrémité 29 tournée vers l'extrémité 13 et une extrémité 30 tournée du côté opposé à l'extrémité 13, avec l'extrémité 29 qui est située dans le tronçon d'obturation 22 à l'écart de l'extrémité 13 et l'extrémité 30 qui est dans le tronçon de réception 21.

Les figures 5 à 7 montrent l'état de service du tube 11 de la paillette 10 illustrée sur la figure 4 lorsque le pincement soudé 19 est effectué comme sur la figure 2, c'est-à-dire que le pincement soudé 19 est plat et s'étend de l'extrémité 13 à la zone de transition 23.

Comme le montre la figure 7, la zone de transition 23 est visible derrière le pincement soudé 19 lorsque le tube 11 est regardé du côté de l'extrémité 13, et par conséquent le liseré 28 est visible au moins sur la zone de transition 23.

On notera que sur la figure 7, l'observateur est aligné avec la direction générale du tube 11 alors qu'en pratique l'opérateur devant récupérer des paillettes dans le récipient de l'enceinte de conservation voit ou peut voir les paillettes légèrement de biais. Ainsi, en pratique, l'opérateur voit davantage le liseré 28 que sur la figure 7. En particulier, il voit aussi le liseré 28 sur le pincement soudé 19 et/ou sur le tronçon de réception 21.

Les figures 8 à 10 montrent l'état de service du tube 11 de la paillette 10 illustrée sur la figure 4 lorsque le pincement soudé 19 est effectué avec des mâchoires 26 dont les éléments de soudage 27 sont plats et relativement étroits.

Le pincement soudé 19 est plat mais, comme les éléments de soudage 27 sont relativement étroits, le pincement soudé 19 ne s'étend pas jusqu'à l'extrémité 13. Il existe un téton 31 entre l'extrémité 13 et le pincement soudé 19.

Le téton 31 comporte un tronçon d'extrémité 32 qui est à section circulaire et un tronçon de transition 33 entre le tronçon d'extrémité 32 et le pincement soudé 19.

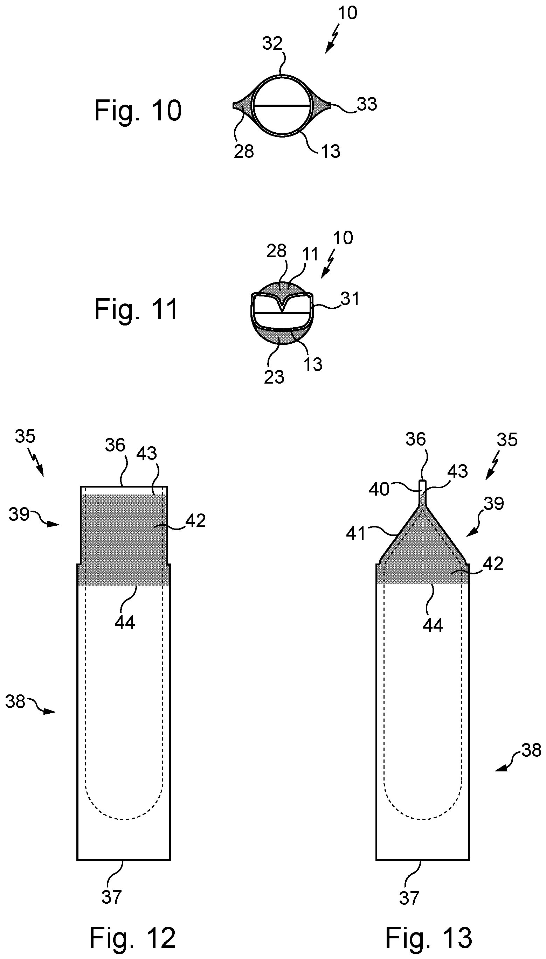

Comme le montre la figure 10, le tronçon de transition 33 est visible derrière le tronçon d'extrémité 32 lorsque le tube 11 est regardé du côté de l'extrémité 13, et par conséquent le liseré 28 est visible au moins sur le tronçon de transition 33.

On notera que sur la figure 10, l'observateur est aligné avec la direction générale du tube 11 alors qu'en pratique l'opérateur devant récupérer des paillettes dans le récipient de l'enceinte de conservation voit ou peut voir les paillettes légèrement de biais. Ainsi, en pratique, l'opérateur voit davantage le liseré 28 que sur la figure 10. En particulier, il voit aussi le liseré 28 sur la zone de transition 23 et/ou sur le tronçon de réception 21.

La figure 11 montre l'état de service du tube 11 de la paillette 10 illustrée sur la figure 4 lorsque le pincement soudé 19 est effectué avec des mâchoires 26 dont les éléments de soudage 27 sont semblables à ceux ayant effectué le pincement soudé 19 montré sur les figures 8 à 10, mais avec l'élément de soudage 27 situé du côté que l'on voit en bas sur la figure 11 qui est en U et l'élément de soudage situé du côté que l'on voit en haut qui est plat et qui rentre entre les joues de l'élément de soudage en U de sorte que paroi du tube 11 est pincée entre l'élément plat et le fond de l'élément en U. L'écart entre les joues de l'élément en U correspond au diamètre du tube 11.

Le pincement soudé 19 est donc plat et de même largeur que le tube 11. Le téton 31 est à section en B ayant sensiblement la même largeur que le tube 11.

Comme le montre la figure 11, la zone de transition 23 est visible derrière le téton 31 lorsque le tube 11 est regardé du côté de l'extrémité 13, et par conséquent le liseré 28 est visible au moins sur la zone de transition 23.

On notera que sur la figure 11, l'observateur est aligné avec la direction générale du tube 11 alors qu'en pratique l'opérateur devant récupérer des paillettes dans le récipient de l'enceinte de conservation voit ou peut voir les paillettes légèrement de biais. Ainsi, en pratique, l'opérateur voit davantage le liseré 28 que sur la figure 11. En particulier, il voit aussi le liseré 28 sur le téton 31 et/ou sur le tronçon de réception 21.

Ainsi, dans chacune des configurations du tronçon d'obturation 22 illustrée sur les figures 5 à 11, le liseré 28 du tube 11 de la paillette selon l'invention peut être vu du côté de l'extrémité 13.

Par conséquent, l'opérateur devant récupérer des paillettes dans le récipient de l'enceinte de conservation et qui voit les différentes paillettes contenues dans ce récipient depuis le haut, c'est-à-dire du côté de l'extrémité 13, pourra discriminer deux paillettes voisines dont l'une est identique à l'autre à part le liseré 28.

Ici, l'aspect visuel donné à la surface externe du tube 11 par le liseré 28 est une couleur uniforme, par exemple la couleur magenta, alors que l'aspect visuel de la surface externe du tube 11 hors du liseré 28 est la couleur de la matière du tube 11, qui est uniforme, par exemple la couleur blanche.

Dans cet exemple, l'opérateur qui voit les différentes paillettes contenues dans ce récipient depuis le haut pourra discriminer deux paillettes voisines dont l'une a un tube ayant une surface externe entièrement de couleur blanche et l'autre un tube ayant une surface externe de même couleur blanche mais avec le liseré 28 de couleur magenta.

En pratique, les utilisateurs disposent d'une gamme de paillettes 10 formée par des paillettes 10 avec liseré 28 et par des paillettes 10 semblables mais sans liseré 28. Suivant la substance à conserver, une paillette 10 avec ou sans liseré 28 est utilisée. Par exemple, la présence ou non du liseré 28 indique que la semence d'une même race bovine est mâle ou femelle.

Ici, le liseré 28 est annulaire lorsque le tube 11 est à l'état initial. Plus précisément, dans l'exemple illustré, lorsque le tube 11 est à l'état initial, l'extrémité 29 et l'extrémité 30 sont parallèles à l'extrémité 13.

Lorsque le tube 11 est à l'état initial, la distance entre l'extrémité 29 et l'extrémité 13 (écart entre le liseré 28 et l'extrémité 13) est de préférence comprise entre 0,1 mm et 4 mm.

Un tel écart entre le liseré 28 et l'extrémité 13 convient particulièrement bien pour voir, du côté de l'extrémité 13, en plus du liseré, la surface externe du tube 11 en-dehors du liseré (visible dans l'écart), ce qui est favorable à l'identification du dispositif auquel appartient le tube.

Ici, le tube 11 des paillettes 10 avec et sans liseré 28 est fabriqué de la même façon. Pour les paillettes concernées, le liseré est ajouté sur le tube 11 par un revêtement externe, ici d'encre déposé par tampographie : un tampon ayant à son extrémité une cavité à section semi-circulaire est mis au contact d'un cliché contenant l'encre à déposer puis le tampon est déplacé pour être mis au contact de la surface externe du tube 11 puis, alors que le contact entre le tube et le tampon est maintenu, le tube 11 est tourné sur lui-même de sorte que le dépôt d'encre est annulaire (sinon, le dépôt d'encre serait semi-annulaire).

L'écart entre le liseré 28 et l'extrémité 13 permet également d'éviter que de l'encre puisse rentrer dans le tube 11, et donc de s'assurer que la substance contenue dans le tube 11 ne rentrera pas en contact avec l'encre.

L'encre utilisée est par exemple du type polymérisable à la lumière ultra-violette.

De telles encres offrent en particulier une certaine résistance aux effets conjugués de la pression et de la température lors d'une soudure thermique avec des mâchoires telles que les mâchoires 26.

De telles encres offrent également une certaine résistance aux cycles de congélation / décongélation dans un liquide cryogénique tel que l'azote liquide.

Enfin de telles encres peuvent recevoir une impression, par exemple des caractères imprimés par jet d'encre.

Lorsque le tube 11 est à l'état initial, la distance entre l'extrémité 29 et l'extrémité 30 (longueur du liseré 28) est de préférence comprise entre 2 mm et 20 mm.

Une telle longueur du liseré 28 permet tout à la fois qu'il soit bien visible et qu'aussi la surface externe du tube 11 en dehors du liseré 28 soit bien visible.

Ici, l'extrémité 30 se trouve à l'emplacement où le tube 11 doit être coupé pour ouvrir la paillette. L'extrémité 30 forme ainsi un repère de découpage du tube 11.

Pour mettre en œuvre cette caractéristique, lorsque le tube 11 est à l'état initial, la distance entre l'extrémité 13 et l'extrémité 30 est de préférence comprise entre 6 mm et 9 mm.

On va maintenant décrire le tube de conditionnement 35 illustré sur les figures 12 et 13.

Le tube 35 s'étend entre une extrémité 36 et une extrémité 37, avec un tronçon de réception 38 pour contenir la dose de substance à base liquide et un tronçon d'obturation 39 prévu pour obturer le tube 35 après que le tronçon de réception 38 a été rempli avec la dose de substance à base liquide. Le tronçon d'obturation 39 s'étend entre le tronçon de réception 38 et l'extrémité 36. Le tronçon de réception 38 s'étend entre le tronçon d'obturation 39 et l'extrémité 37.

A l'état initial (figure 12), le tube 35 a la forme d'un doigt de gant avec l'extrémité 36 qui est ouverte et l'extrémité 37 qui est fermée.

Le tube 35 est fait dans une matière plastique ou un ensemble de matières plastiques lui permettant d'être obturé par écrasement et soudage du tronçon d'obturation 39.

Un tel tube est décrit notamment dans la demande de brevet français 2 912 727, à laquelle correspond la demande de brevet américain US 2010/0107560.

Les substances biologiques conditionnées dans un tel tube sont en particulier des échantillons tissulaires. Ici, le tube 35 correspond à l'un des exemples décrits dans la demande de brevet français 2 912 727 avec une hauteur de 48 mm et un diamètre intérieur de 9,8 mm, avec une épaisseur de paroi relativement importante (de l'ordre de 1 mm) sauf dans le tronçon d'obturation 39 où l'épaisseur est moindre, par exemple 0,6 mm, pour faciliter la formation d'un pincement soudé 40 (figure 13), semblable au pincement soudé 19 de la paillette 10, par une machine semblable à la machine 25.

A l'état initial du tube 35 (figure 12), le tronçon de réception 38 et le tronçon d'obturation 39 sont à section circulaire.

A l'état rempli et obturé (figure 13), le tube 35 est dans un état de service où :
- le tronçon de réception 38 est à section circulaire ; et
- le tronçon d'obturation 39 comporte le pincement soudé 40 de la paroi du tube 35, qui forme un scellement hermétique, et comporte une zone de transition 41 entre le pincement soudé 40 et le tronçon de réception 38.

Ici, le pincement soudé 40 est conformé comme le pincement soudé 19 illustré sur les figures 5 à 7, c'est-à-dire qu'il est plat et s'étend de l'extrémité 36 à la zone de transition 41.

Le tube 35, à l'état rempli et obturé, est placé dans une enceinte de conservation de la même façon que la paillette 10, avec l'extrémité fermée 37 en bas et le tronçon d'obturation 39 en haut.

Conformément à l'invention, le tube 35 comporte sur une partie du tronçon d'obturation 39 un liseré différenciant 42 donnant à la surface externe du tube 35 un aspect visuel différent de l'aspect visuel de la surface externe du tube 35 hors du liseré 42.

Ici, le liseré 42 est situé sur le tronçon d'obturation 39 de la même façon que le liseré 28 est situé sur le tronçon d'obturation 22.

Ainsi, le liseré 42 est situé sur tout le tronçon d'obturation 39 sauf que le liseré 42 est à l'écart de l'extrémité 36. Le liseré 42 est également situé sur une partie du tronçon de réception 38 voisine du tronçon d'obturation 39. Le liseré 42 s'étend entre une extrémité 43 tournée vers l'extrémité 36 et une extrémité 44 tournée du côté opposé à l'extrémité 36, avec l'extrémité 43 qui est située dans le tronçon d'obturation 39 à l'écart de l'extrémité 36 et l'extrémité 44 qui est dans le tronçon de réception 38.

De même que montré sur la figure 7, la zone de transition 41 est visible derrière le pincement soudé 40 lorsque le tube 35 est regardé du côté de l'extrémité 36, et par conséquent le liseré 42 est visible au moins sur la zone de transition 41.

D'une façon générale, la description donnée ci-dessus pour le liseré 28 du tube 11 s'applique au liseré 42 du tube 35, y compris pour des variantes non illustrées de l'état de service du tube 35 semblables aux états de service du tube 11 illustrés sur les figures 8 à 10 et sur la figure 11.

Dans des variantes non représentées, le liseré différenciant tel que 28 ou 42 est agencé différemment tout en étant configuré pour être visible du côté de la première extrémité telle que 13 ou 36 alors que le tube tel que 11 ou 35 est dans l'état de service, en particulier avec une extension longitudinale différente, par exemple en étant présent sur la totalité du tronçon d'obturation tel que 22 ou 39 ou présent uniquement sur la zone de transition telle que 23 ou 41, et/ou avec une extension angulaire différente, par exemple semi-annulaire.

Dans des variantes non représentées, l'aspect visuel donné à la surface externe du tube par le liséré différenciant tel que 28 ou 42 est différent d'une couleur uniforme, par exemple un motif à raies annulaires, et/ou l'aspect visuel de la surface externe du tube tel que 11 ou 35 hors du liseré est différent d'une couleur uniforme, par exemple un motif avec des raies longitudinales.

Dans des variantes non représentées, le liséré différenciant tel que 28 ou 42 est formé par un revêtement externe déposé différemment que par tampographie, par exemple par sérigraphie ; et/ou le revêtement est différent d'un encre, par exemple une peinture ; et/ou le liseré différenciant est formé autrement que par un revêtement, par exemple en modifiant localement la couleur de la matière du tube.

Dans des variantes non représentées, le tronçon d'obturation tel que 22 ou 39 est conformé différemment, par exemple avec le pincement soudé tel que 19 ou 40 qui n'est pas plat, par exemple avec une section en V.

De nombreuses autres variantes sont possibles en fonction de circonstances, et l'on rappelle à cet égard que l'invention ne se limite pas aux exemples décrits et représentés.

## Revendications

1. Dispositif pour la conservation d'une dose prédéterminée (18) de substance à base liquide, comportant un tube (11 ; 35) en matière plastique soudable s'étendant entre une première extrémité (13 ; 36) et une seconde extrémité (14 ; 37), lequel tube (11 ; 35) comporte un tronçon de réception (21 ; 38) prévu pour contenir ladite dose prédéterminée (18) de substance à base liquide et un tronçon d'obturation (22 ; 39) prévu pour obturer le tube (11 ; 35) après que le tronçon de réception (21 ; 38) a été rempli avec ladite dose prédéterminée (18) de substance à base liquide, lequel tronçon d'obturation (22 ; 39) s'étend entre la première extrémité (13 ; 36) du tube (11 ; 35) et le tronçon de réception (21 ; 38), lequel tube (11 ; 35) admet :
- un état initial où le tronçon de réception (21 ; 38) et le tronçon d'obturation (22 ; 39) sont à section circulaire ; et
- un état de service où le tronçon de réception (21 ; 38) est à section circulaire tandis que le tronçon d'obturation (22 ; 39) comporte un pincement soudé (19 ; 40) de la paroi du tube (11 ; 35) formant un scellement hermétique et comporte une zone de transition (23 ; 41) entre le pincement soudé (19 ; 40) et le tronçon de réception (21 ; 38) ;
**caractérisé en ce que** le tube (11 ; 35) comporte sur au moins une partie du tronçon d'obturation (22 ; 39) un liseré différenciant (28 ; 42) donnant à la surface externe du tube (11 ; 35) un aspect visuel différent de l'aspect visuel de la surface externe du tube (11 ; 35) hors du liseré différenciant (28 ; 42), lequel liseré différenciant (28 ; 42) est configuré pour être visible du côté de la première extrémité (13 ; 36) alors que le tube (11 ; 35) est dans l'état de service.

2. Dispositif selon la revendication 1, **caractérisé en ce que** le liseré différenciant (28 ; 42) est présent au moins sur la zone de transition (23 ; 41).

3. Dispositif selon l'une quelconque des revendications 1 ou 2, **caractérisé en ce que** le liséré différenciant (28 ; 42) est présent au moins sur une partie du tronçon de réception (21 ; 38) voisine du tronçon d'obturation (22 ; 39).

4. Dispositif selon l'une quelconque des revendications 1 à 3, **caractérisé en ce que** le liséré différenciant (28 ; 42) est annulaire lorsque le tube (11 ; 35) est à l'état initial.

5. Dispositif selon l'une quelconque des revendications 1 à 4, **caractérisé en ce que** le liséré différenciant (28 ; 42) s'étend entre une première extrémité (29 ; 43) tournée vers la première extrémité (13 ; 36) du tube (11 ; 35) et une seconde extrémité (30 ; 44) tournée du côté opposé à la première extrémité (13 ; 36) du tube (11 ; 35), avec la première extrémité (29 ; 43) du liséré différenciant (28 ; 42) qui est située dans le tronçon d'obturation (22 ; 39) à l'écart de la première extrémité (13 ; 36) du tube (11 ; 35) et la seconde extrémité (30 ; 44) du liséré différenciant (28 ; 42) qui est dans le tronçon de réception (21 ; 38).

6. Dispositif selon la revendication 5, **caractérisé en ce que** lorsque le tube (11 ; 35) est à l'état initial, la distance entre la première extrémité (29 ; 43) du liséré différenciant (28 ; 42) et la première extrémité (13 ; 36) du tube (11 ; 35) est comprise entre 0,1 mm et 4 mm.

7. Dispositif selon l'une quelconque des revendications 5 ou 6, **caractérisé en ce que** lorsque le tube (11 ; 35) est à l'état initial, la distance entre la première extrémité (29 ; 43) et la seconde extrémité (30 ; 44) du liséré différenciant (28 ; 42) est comprise entre 2 mm et 20 mm.

8. Dispositif selon l'une quelconque des revendications 5 à 7, **caractérisé en ce que** lorsque le tube (11 ; 35) est à l'état initial, la distance entre la première extrémité (13 ; 36) du tube (11 ; 35) et la seconde extrémité (30 ; 44) du liséré différenciant (28 ; 42) est comprise entre 6 mm et 9 mm.

9. Dispositif selon l'une quelconque des revendications 1 à 8, **caractérisé en ce que** l'aspect visuel donné à la surface externe du tube (11 ; 35) par le liséré différenciant (28 ; 42) est une couleur uniforme, alors que l'aspect visuel de la surface externe du tube (11 ; 35) hors du liséré différenciant (28 ; 42) est la couleur de la matière du tube (11 ; 35), qui est uniforme.

10. Dispositif selon l'une quelconque des revendications 1 à 9 **caractérisé en ce que** le liséré différenciant (28 ; 42) est formé par un revêtement externe du tube (11 ; 35).

11. Dispositif selon l'une quelconque des revendications 1 à 10 **caractérisé en ce que** le tube permet au pincement soudé (19 ; 40) d'être plat et de s'étendre de la première extrémité (13 ; 36) du tube (11 ; 35) à la zone de transition (23 ; 41).

12. Dispositif selon l'une quelconque des revendications 1 à 10, **caractérisé en ce que** le tube permet au pincement soudé (19) d'être plat et de s'étendre de la zone de transition (23) à un téton (31) s'étendant entre le pincement soudé (19) et la première extrémité (13) du tube (11).

13. Dispositif selon l'une quelconque des revendications 1 à 12, **caractérisé en ce qu'**il forme une paillette (10) comportant, en outre du tube (11), un bouchon (12) disposé au voisinage de la seconde extrémité (14) du tube (11) à l'état initial.

14. Dispositif selon l'une quelconque des revendications 1 à 12, **caractérisé en ce qu'**il forme un tube de conservation (35) ayant à l'état initial une forme de doigt de gant dont la première extrémité (36) est ouverte à l'état initial et dont la seconde extrémité (37) est fermée à l'état initial.

15. Gamme de plusieurs dispositifs pour la conservation d'une dose prédéterminée de substance à base liquide, comportant un dispositif selon l'une quelconque des revendications 1 à 14 et un dispositif semblable mais sans le liseré différenciant (28 ; 42).

## Patentansprüche

1. Vorrichtung zur Aufbewahrung einer vorbestimmten Dosis (18) einer Substanz auf Flüssigkeitsbasis, umfassend ein Rohr (11; 35) aus schweißbarem Kunststoffmaterial, das sich zwischen einem ersten Ende (13; 36) und einem zweiten Ende (14; 37) erstreckt, wobei das Rohr (11; 35) einen Aufnahmeabschnitt (21; 38), der vorgesehen ist, die vorbestimmte Dosis (18) der Substanz auf Flüssigkeitsbasis aufzunehmen, und einen Verschlussabschnitt (22; 39) umfasst, der vorgesehen ist, das Rohr (11; 35) zu verschließen, nachdem der Aufnahmeabschnitt (21; 38) mit der vorbestimmten Dosis (18) der Substanz auf Flüssigkeitsbasis gefüllt wurde, wobei sich der Verschlussabschnitt (22; 39) zwischen dem ersten Ende (13; 36) des Rohrs (11; 35) und dem Aufnahmeabschnitt (21; 38) erstreckt, wobei das Rohr (11; 35) Folgendes zulässt:
- einen Ausgangszustand, in dem der Aufnahmeabschnitt (21; 38) und der Verschlussabschnitt (22; 39) einen kreisförmigen Querschnitt haben; und
- einen Betriebszustand, in dem der Aufnahmeabschnitt (21; 38) einen kreisförmigen Querschnitt hat, während der Verschlussabschnitt (22; 39) eine geschweißte Quetschstelle (19; 40) der Wand des Rohrs (11; 35) umfasst, die eine hermetische Abdichtung bildet, und einen Übergangsbereich (23; 41) zwischen der geschweißten Quetschstelle (19; 40) und dem Aufnahmeabschnitt (21; 38) umfasst;
**dadurch gekennzeichnet, dass** das Rohr (11; 35) an mindestens einem Teil des Verschlussabschnitts (22; 39) einen Differenzierungsrand (28; 42) aufweist, der der Außenfläche des Rohrs (11; 35) ein anderes visuelles Erscheinungsbild verleiht als das visuelle Erscheinungsbild der Außenfläche des Rohrs (11; 35) außerhalb des Differenzierungsrands (28; 42), wobei der Differenzierungsrand (28; 42) so eingerichtet ist, dass er von der Seite des ersten Endes (13; 36) sichtbar ist, während sich das Rohr (11; 35) im Betriebszustand befindet.

2. Vorrichtung nach Anspruch 1, **dadurch gekennzeichnet, dass** der Differenzierungsrand (28; 42) mindestens im Übergangsbereich (23; 41) vorhanden ist.

3. Vorrichtung nach einem der Ansprüche 1 oder 2, **dadurch gekennzeichnet, dass** der Differenzierungsrand (28; 42) mindestens an einem Teil des Aufnahmeabschnitts (21; 38) in der Nähe des Verschlussabschnitts (22; 39) vorhanden ist.

4. Vorrichtung nach einem der Ansprüche 1 bis 3, **dadurch gekennzeichnet, dass** der Differenzierungsrand (28; 42) ringförmig ist, wenn sich das Rohr (11; 35) im Ausgangszustand befindet.

5. Vorrichtung nach einem der Ansprüche 1 bis 4, **dadurch gekennzeichnet, dass** sich der Differenzierungsrand (28; 42) zwischen einem ersten Ende (29; 43), das dem ersten Ende (13; 36) des Rohrs (11; 35) zugewandt ist, und einem zweiten Ende (30; 44), das der dem ersten Ende (13; 36) des Rohrs (11; 35) gegenüberliegenden Seite zugewandt ist, erstreckt, wobei das erste Ende (29; 43) des Differenzierungsrands (28; 42) sich im Verschlussabschnitt (22; 39) entfernt von dem ersten Ende (13; 36) des Rohrs (11; 35) befindet und das zweite Ende (30; 44) des Differenzierungsrands (28; 42) sich im Aufnahmeabschnitt (21; 38) befindet.

6. Vorrichtung nach Anspruch 5, **dadurch gekennzeichnet, dass**, wenn sich das Rohr (11; 35) im Ausgangszustand befindet, der Abstand zwischen dem ersten Ende (29; 43) des Differenzierungsrands (28; 42) und dem ersten Ende (13; 36) des Rohrs (11; 35) zwischen 0,1 mm und 4 mm beträgt.

7. Vorrichtung nach einem der Ansprüche 5 oder 6, **dadurch gekennzeichnet, dass**, wenn sich das Rohr (11; 35) im Ausgangszustand befindet, der Abstand zwischen dem ersten Ende (29; 43) und dem zweiten Ende (30; 44) des Differenzierungsrands (28; 42) zwischen 2 mm und 20 mm beträgt.

8. Vorrichtung nach einem der Ansprüche 5 bis 7, **dadurch gekennzeichnet, dass**, wenn sich das Rohr (11; 35) im Ausgangszustand befindet, der Abstand zwischen dem ersten Ende (13; 36) des Rohrs (11; 35) und dem zweiten Ende (30; 44) des Differenzierungsrands (28; 42) zwischen 6 mm und 9 mm beträgt.

9. Vorrichtung nach einem der Ansprüche 1 bis 8, **dadurch gekennzeichnet, dass** das der Außenfläche des Rohrs (11; 35) durch den Differenzierungsrand (28; 42) gegebene visuelle Erscheinungsbild eine einheitliche Farbe ist, während das visuelle Erscheinungsbild der Außenfläche des Rohrs (11; 35) außerhalb des Differenzierungsrands (28; 42) die Farbe des Materials des Rohrs (11; 35) ist, die einheitlich ist.

10. Vorrichtung nach einem der Ansprüche 1 bis 9, **dadurch gekennzeichnet, dass** der Differenzierungsrand (28; 42) durch eine äußere Beschichtung des Rohrs (11; 35) gebildet ist.

11. Vorrichtung nach einem der Ansprüche 1 bis 10, **dadurch gekennzeichnet, dass** das Rohr ermöglicht, dass die geschweißte Quetschstelle (19; 40) flach ist und sich vom ersten Ende (13; 36) des Rohrs (11; 35) bis zum Übergangsbereich (23; 41) erstreckt.

12. Vorrichtung nach einem der Ansprüche 1 bis 10, **dadurch gekennzeichnet, dass** das Rohr ermöglicht, dass die geschweißte Quetschstelle (19) flach ist und sich vom Übergangsbereich (23) zu einem Zapfen (31) erstreckt, der sich zwischen der geschweißten Quetschstelle (19) und dem ersten Ende (13) des Rohrs (11) erstreckt.

13. Vorrichtung nach einem der Ansprüche 1 bis 12, **dadurch gekennzeichnet, dass** sie ein Besamungsrohr (10) bildet, das zusätzlich zum Rohr (11) einen Stopfen (12) umfasst, der in der Nähe des zweiten Endes (14) des Rohrs (11) im Ausgangszustand angeordnet ist.

14. Vorrichtung nach einem der Ansprüche 1 bis 12, **dadurch gekennzeichnet, dass** sie ein Konservierungsrohr (35) bildet, das im Ausgangszustand eine Handschuhfingerform aufweist, dessen erstes Ende (36) im Ausgangszustand offen ist und dessen zweites Ende (37) im Ausgangszustand geschlossen ist.

15. Reihe mehrerer Vorrichtungen zur Konservierung einer vorbestimmten Dosis einer Substanz auf Flüssigkeitsbasis, die eine Vorrichtung nach einem der Ansprüche 1 bis 14 und eine ähnliche Vorrichtung, jedoch ohne den Differenzierungsrand (28; 42), umfassen.

## Claims

1. Device for storing a predetermined dose (18) of liquid-based substance, including a tube (11; 35) of weldable plastics material extending between a first end (13; 36) and a second end (14; 37), which tube (11; 35) includes a receiving section (21; 38) provided to contain said predetermined dose (18) of liquid-based substance and a closing section (22; 39) provided to seal the tube (11; 35) after the receiving section (21; 38) was filled with said predetermined dose (18) of liquid-based substance, which closing section (22; 39) extends between the first end (13; 36) of the tube (11; 35) and the receiving section (21; 38), which tube (11; 35) admits:
- an initial state wherein the receiving section (21; 38) and the closing section (22; 39) are of circular cross-section; and
- an operating state wherein the receiving section (21; 38) is of circular cross-section while the closing section (22; 39) includes a welded pinch (19; 40) of the tube wall (11; 35) forming a hermetic seal and includes a transition zone (23; 41) between the welded pinch (19; 40) and the receiving section (21; 38);
**characterised in that** the tube (11; 35) includes, on at least a part of the sealing section (22; 39), a differentiating boundary (28; 42) giving the outer surface of the tube (11; 35) a visual appearance different from the visual appearance of the outer surface of the tube (11; 35) outside the differentiating boundary (28; 42), which differentiating boundary (28; 42) is configured to be visible from the same side as the first end (13; 36) while the tube (11; 35) is in the operating state.

2. Device according to claim 1, **characterised in that** the differentiating boundary (28; 42) is present at least on the transition zone (23; 41).

3. Device according to either one of claims 1 or 2, **characterised in that** the differentiating boundary (28; 42) is present on at least a part of the receiving section (21; 38) adjacent to the closing section (22; 39).

4. Device according to any one of claims 1 to 3, **characterised in that** the differentiating boundary (28; 42) is annular when the tube (11; 35) is in the initial state.

5. Device according to any one of claims 1 to 4, **characterised in that** the differentiating boundary (28; 42) extends between a first end (29; 43) turned towards the first end (13; 36) of the tube (11; 35) and a second end (30; 44) turned to the side opposite to the first end (13; 36) of the tube (11; 35), with the first end (29; 43) of the differentiating boundary (28; 42) being located in the closing section (22; 39) away from the first end (13; 36) of the tube (11; 35) and the second end (30; 44) of the differentiating boundary (28; 42) being in the receiving section (21; 38).

6. Device according to claim 5, **characterised in that**, when the tube (11; 35) is in the initial state, the distance between the first end (29; 43) of the differentiating boundary (28; 42) and the first end (13; 36) of the tube (11; 35) is between 0.1 mm and 4 mm**.**

7. Device according to either one of claims 5 or 6, **characterised in that**, when the tube (11; 35) is in the initial state, the distance between the first end (29; 43) and the second end (30; 44) of the differentiating edge (28; 42) is between 2 mm and 20 mm.

8. Device according to any one of claims 5 to 7, **characterised in that**, when the tube (11; 35) is in the initial state, the distance between the first end (13; 36) of the tube (11; 35) and the second end (30; 44) of the differentiating boundary (28; 42) is between 6 mm and 9 mm**.**

9. Device according to any one of claims 1 to 8, **characterised in that** the visual appearance given to the outer surface of the tube (11; 35) by the differentiating boundary (28; 42) is a uniform colour, whereas the visual appearance of the outer surface of the tube (11; 35) outside the differentiating boundary (28; 42) is the colour of the material of the tube (11; 35), which is uniform.

10. Device according to any one of claims 1 to 9, **characterised in that** the differentiating boundary (28; 42) is formed by an external coating of the tube (11; 35).

11. Device according to any one of claims 1 to 10, **characterised in that** the tube allows the welded pinch (19; 40) to be flat and extend from the first end (13; 36) of the tube (11; 35) to the transition zone (23; 41).

12. Device according to any one of claims 1 to 10, **characterised in that** the tube allows the welded pinch (19) to be flat and extend from the transition zone (23) to a stud (31) extending between the welded pinch (19) and the first end (13) of the tube (11).

13. Device according to any one of claims 1 to 12, **characterised in that** it forms a flake (10) including, in addition to the tube (11), a stopper (12) disposed in the vicinity of the second end (14) of the tube (11) in the initial state.

14. Device according to any one of claims 1 to 12, **characterised in that** it forms a storage tube (35) having in the initial state a glove finger shape the first end (36) of which is open in the initial state and the second end (37) of which is closed in the initial state.

15. Range of a plurality of devices for storing a predetermined dose of liquid-based substance, including a device according to any one of claims 1 to 14 and a similar device but without the differentiating boundary (28; 42).
